# EUROPÄISCHE PATENTSCHRIFT

(11) **EP 0 473 904 B1**
(45) Veröffentlichungstag und Bekanntmachung des Hinweises auf die Patenterteilung: **20.04.1994**
(21) Anmeldenummer: 91111466.8
(22) Anmeldetag: 10.07.1991
(51) Int. Cl.: B23K 11/06

(54) **Schiene zum Führen miteinander zu verschweissender Blechränder**
Bar for guiding of plate edges for welding
Barre pour guider des bords de tête pour joindre par soudure

(30) Priorität: 07.08.1990 CH 2584/90
(43) Veröffentlichungstag der Anmeldung: 11.03.1992
(73) Patentinhaber: ELPATRONIC AG, CH-6300 Zug (CH)
(72) Erfinder: Portmann, Niklaus, CH-5454 Bellikon (CH)

(56) Entgegenhaltungen:
- WO-A-90/02016
- DE-A- 3 432 505

## Beschreibung

Die Erfindung betrifft eine Schiene zum Führen mindestens eines von zwei miteinander zu verschweißenden Blechrändern, insbes. Längsrändern von Dosenzargen, mit
- einem Tragkörper mit einer Längsnut, die zwei zueinander mindestens annähernd parallele Nutseitenflächen und eine zu diesen mindestens annähernd lotrechte Nutgrundfläche aufweist, und
- einem Einsatz aus hartem Material, der in der Längsnut befestigt ist und an deren Nutgrundfläche anliegt.

Eine solche Schiene in Gestalt einer sogenannten Z-Schiene ist aus dem Dokument WO90/02016 bekannt. Diese Z-Schiene hat einen oberen und einen unteren Tragkörper, in die von je einer Seite her eine obere bzw. untere Längsnut eingearbeitet ist. In jeder der Längsnuten ist ein Einsatz befestigt, in dem eine Führungsnut für einen Blechrand ausgebildet ist. Die Einsätze bestehen aus Wolframcarbid oder keramischem Werkstoff wie Silikonnitrit, Aluminiumoxid oder anderem abriebfesten, elektrisch nicht leitendem Material und werden durch Kleben im Tragkörper befestigt; erst danach werden ihre Führungsnuten durch Schleifen ausgebildet. Wenn die Einsätze verschlissen sind, müssen sie zusammen mit dem Tragkörper ausgewechselt werden, da eine Erneuerung der Einsätze an Ort und Stelle nicht möglich ist.

Aus der DE 3432505 A1 ist eine Z-Schiene bekannt, die zwei übereinander angeordnete Tragkörper aufweist, an denen Gleitkörper befestigt sind. Die Gleitkörper sind derart stufenförmig profiliert und ineinandergreifend angeordnet, daß sie gemeinsam zwei übereinanderliegende und einander überlappende Längsnuten zum Führen je eines Blechrandes bilden. Durch Einstellen der Gleitkörper lassen sich Überlappung und Höhenabstand der beiden Blechränder in bestimmten Grenzen verändern. Die Herstellung dieser stufenförmig profilierten Gleitkörper ist teuer. Wenn die Gleitkörper aus hartem Werkstoff bestehen, beispielsweise aus Wolframcarbid oder einem keramischen Werkstoff, dann sind sie stoßempfindlich, und es besteht die Gefahr, daß sie schon bei unvorsichtigem Festspannen an den zugehörigen Tragkörpern brechen.

Der Erfindung liegt deshalb die Aufgabe zugrunde, eine Schiene zum Führen mindestens eines von zwei miteinander zu verschweißenden Blechrändern derart weiterzubilden, daß an ihnen aufgetretener Verschleiß schnell und mit geringen Kosten beseitigt werden kann.

Die Aufgabe ist erfindungsgemäß ausgehend von einer Schiene der eingangs beschriebenen Gattung dadurch gelöst, daß
- die Längsnut ein hinterschnittenes Profil mit einer Erweiterung aufweist, durch die eine der Nutseitenflächen von der Nutgrundfläche getrennt ist,
- der Einsatz auswechselbar in der Erweiterung befestigt ist, sich von dort aus mindestens bis zur Ebene der gegenüberliegenden Nutseitenfläche erstreckt und eine von der Nutgrundfläche abgewandte Außenfläche zum Abstützen einer Kante des Blechrandes aufweist, und
- die Nutseitenflächen des Tragkörpers zum unmittelbaren Führen von seitlichen Randflächen des Blechrandes ausgebildet sind.

Bei der erfindungsgemäßen Schiene hat der oder jeder Einsatz nur die Kante des zugehörigen Blechrandes abzustützen und zu führen. Deshalb kann der Einsatz frei von jeglicher Nut oder Abstufung sein. Ein derart einfacher Einsatz ist verhältnismäßig leicht herstellbar und wenig bruchempfindlich. Die Nutseitenflächen, die bei der erfindungsgemäßen Schiene im Gegensatz zu den beschriebenen bekannten Schienen vom Tragkörper selbst gebildet sind, werden von den seitlichen Blechrandflächen, die sie zu führen haben, nur wenig belastet. Diese seitlichen Blechrandflächen sind außerdem üblicherweise gewalzte Flächen, die im Vergleich zu der meist gestanzten oder geschnittenen Kante des Blechrandes glatt sind und dementsprechend wenig Reibung erzeugen. Der Tragkörper kann deshalb beispielsweise aus üblichem Werkzeugstahl bestehen, ohne daß an den Nutseitenflächen ein erheblicher Verschleiß zu erwarten wäre. Dabei kann der Tragkörper gehärtet und/oder beschichtet sein, z.B. aus Isolationsgründen mit AlO₂.

Vorteilhafte Ausgestaltungen der Erfindung sind in den Unteransprüchen beschrieben.

Ein Ausführungsbeispiel der Erfindung wird im folgenden anhand schematischer Zeichnungen mit weiteren Einzelheiten erläutert. Es zeigen:
- Fig. 1: eine Z-Schiene in Seitenansicht,
- Fig. 2: den Schnitt II-II in Fig. 1 in starker Vergrößerung,
- Fig. 3: den Ausschnitt III in Fig. 2,
- Fig. 4: den Ausschnitt IV in Fig. 2, noch stärker vergrößert, und
- Fig. 5a bis 5c: Abwandlungen von Fig. 4.

Die dargestellte Z-Schiene hat zwei Tragkörper 12, die in bezug auf eine Längsmittelachse A der Z-Schiene symmetrisch zueinander gestaltet und in einem Stück aus Werkzeugstahl hergestellt sind.

Jeder der Tragkörper 12 hat eine Längsnut 14 mit zwei parallelen, in Einbaulage waagerechten Nutseitenflächen 16 und einer senkrechten Nutgrundfläche 18. Im Inneren jedes Tragkörpers 12 hat die zugehörige Längsnut 14 eine Erweiterung 20, die von der Nutgrundfläche 18, einer dazu parallelen Gegenfläche 22 und einer dazu normalen, in Einbaulage also waagerechten Flanke 24 begrenzt ist. Der Erweiterung 20 gegenüberliegend ist in jeder Längsnut 14 eine Ausbuchtung 26 ausgebildet, die durch eine zur Flanke 24 parallele Gegenflanke 28 begrenzt ist. Die Erweiterung 20 und Ausbuchtung 26 jeder Längsnut 14 bilden somit einen Hohlraum von rechteckigem Querschnitt, der jedoch anstelle von Ecken ausgerundete Vertiefungen 30 aufweist.

In jeder der Erweiterungen 20 ist ein Einsatz 32 aus hartem, verschleißfestem Werkstoff befestigt, beispielsweise aus Hartmetall oder keramischem Werkstoff. Der Einsatz hat einen rechteckigen Querschnitt und erstreckt sich bis in die gegenüberliegende Ausbuchtung 26 hinein. In jeden der Tragkörper 12 sind in Längsabständen Stifte 34 eingeschraubt, die je einen in die Erweiterung 20 hineinragenden Fuß 36 aufweisen. Jeder der Stifte 34 ist unter einem Winkel von 45° bis 75°, vorzugsweise ungefähr 60°, gegen die senkrechte Längsmittelebene B der Z-Schiene 10 geneigt und drückt mit einem Fuß 36 gegen eine entsprechend geneigte schräge Anlagefläche 38 am zugehörigen Einsatz 32. Jeder der Einsätze 32 wird somit von den zugehörigen Stiften 34 gegen die zugehörige Nutgrundfläche 18 und Gegenflanke 28 gedrückt und dadurch starr im Tragkörper 12 befestigt.

Jeder der Einsätze 32 hat eine von der zugehörigen Nutgrundfläche 18 abgewandte, zu ihr parallele Außenfläche 40, an der ein Blechrand 42 einer Dosenzarge mit seiner gestanzten oder geschnittenen Kante 44 abgestützt und geführt ist. Den voneinander abgewandten seitlichen Randflächen 46 des Blechrandes 42 ist je eine der am Tragkörper 12 ausgebildeten Nutseitenflächen 16 als Führungsfläche zugeordnet.

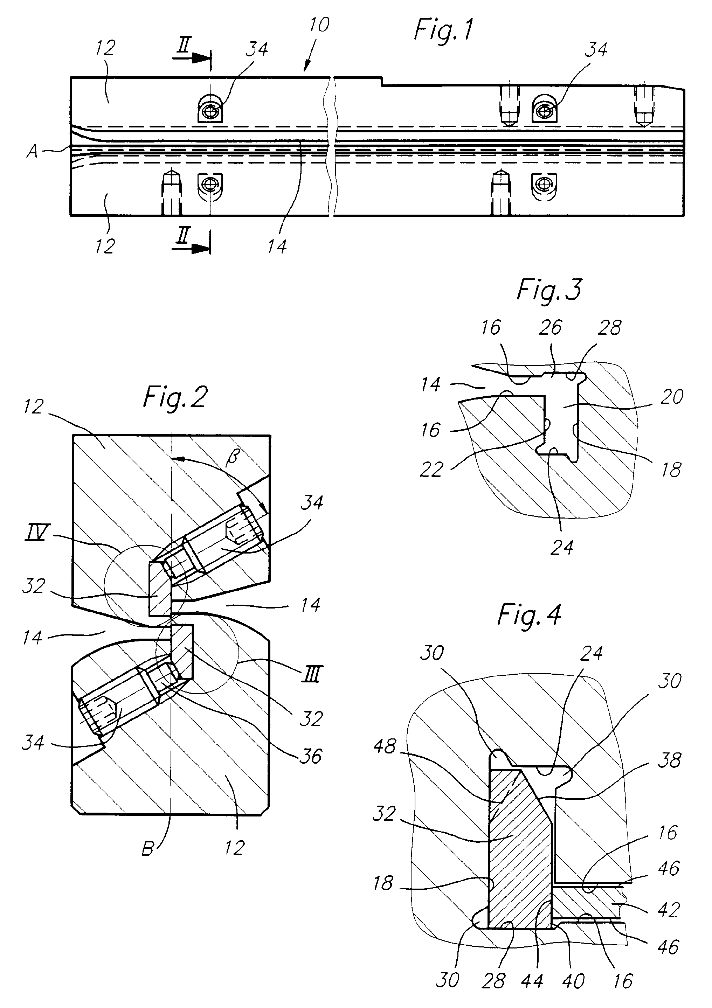

An jedem der Einsätze 32 können, wie in Fig. 4 mit einer gestrichelten Linie angedeutet, weitere schräge Anlageflächen 48 derart ausgebildet sein, daß der Einsatz 32, wenn seine Außenfläche 40 verschlissen ist, ausgebaut und gewendet wieder eingebaut werden kann, um mit seiner bisher an der Nutgrundfläche 18 anliegenden Fläche nach außen gewandt weiter benutzt zu werden.

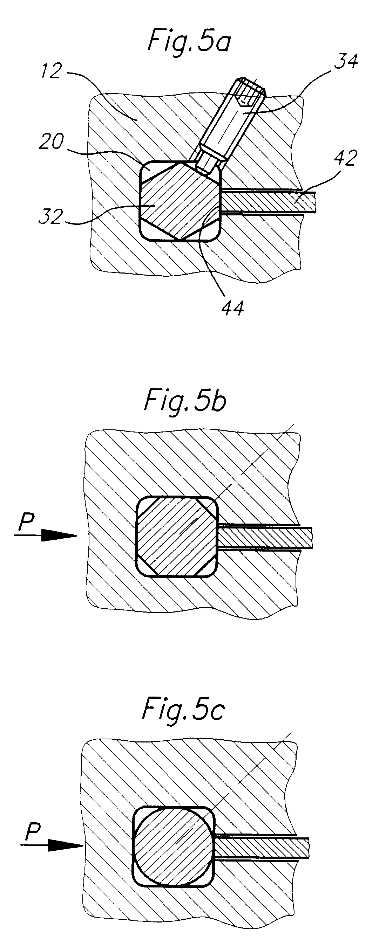

Die Einsätze 32 können anstelle des in Fig. 2 bis 4 abgebildeten Rechteckprofils eine andere Profilform aufweisen. Beispiele solcher anderen Profile sind in Fig. 5a bis 5c dargestellt, nämlich in Fig. 5a ein Sechseckprofil, in Fig. 5b ein Achteckprofil und in Fig. 5c ein Kreisprofil. All diese Einsätze 32 lassen sich mehrfach drehen und wiederverwenden, wenn sie an ihren zuvor als Anlageflächen für die Kante 44 eines Blechrandes 42 verwendeten Flächen verschlissen sind.

Zum Festspannen der Einsätze 32 können Stifte 34 verwendet werden, deren Anordnung der in Fig. 2 dargestellten entspricht. Alternativ können solche Stifte so angeordnet sein, daß sie gemäß Fig. 5b und 5c Kräfte in Richtung der Pfeile P auf die Einsätze 32 ausüben, also Kräfte, die den Anlagekräften der Blechränder 42 entgegenwirken.

## Patentansprüche

1. Schiene zum Führen mindestens eines von zwei miteinander zu verschweißenden Blechrändern (42), insbes. Längsrändern von Dosenzargen, mit
- einem Tragkörper (12) mit einer Längsnut (14), die zwei zueinander mindestens annähernd parallele Nutseitenflächen (16) und eine zu diesen mindestens annähernd lotrechte Nutgrundfläche (18) aufweist, und
- einem Einsatz (32) aus hartem Material, der in der Längsnut (14) befestigt ist und an deren Nutgrundfläche (18) anliegt,
dadurch **gekennzeichnet,** daß
- die Längsnut (14) ein hinterschnittenes Profil mit einer Erweiterung (20) aufweist, durch die eine der Nutseitenflächen (16) von der Nutgrundfläche (18) getrennt ist,
- der Einsatz (32) auswechselbar in der Erweiterung (20) befestigt ist, sich von dort aus mindestens bis zur Ebene der gegenüberliegenden Nutseitenfläche (16) erstreckt und eine von der Nutgrundfläche (18) abgewandte Außenfläche (40) zum Abstützen einer Kante (44) des Blechrandes (42) aufweist, und
- die Nutseitenflächen (16) des Tragkörpers (12) zum unmittelbaren Führen von seitlichen Randflächen (46) des Blechrandes (42) ausgebildet sind.

2. Schiene nach Anspruch 1,
dadurch **gekennzeichnet,** daß der Einsatz (32) einen regelmäßig polygonalen Querschnitt hat.

3. Schiene nach Anspruch 1 oder 2,
dadurch **gekennzeichnet,** daß die Längsnut (14) beidseitig hinterschnitten ist, so daß der Erweiterung (20) eine Ausbuchtung (26) gegenüberliegt, und der Einsatz (32) sich von der Erweiterung (20) quer durch die Längsnut (14) bis in die Ausbuchtung (26) erstreckt.

4. Schiene nach Anspruch 3,
dadurch **gekennzeichnet,** daß die Erweiterung (20) und die Ausbuchtung (26) zusammen ein an den Einsatz (32) angepaßtes Profil haben, das anstelle von Ecken ausgerundete Vertiefungen (30) aufweist.

5. Schiene nach einem der Ansprüche 1 bis 4,
dadurch **gekennzeichnet,** daß in die Erweiterung (20) mindestens eine Bohrung mündet, die einen Stift (34) zum Festklemmen des Einsatzes (32) aufnimmt.

6. Schiene nach Anspruch 5,
dadurch **gekennzeichnet,** daß der Stift (34) ein Gewindestift ist.

7. Schiene nach Anspruch 5 oder 6,
dadurch **gekennzeichnet,** daß der Stift (34) sich unter einem solchen Winkel (β) zur Nutgrundfläche (18) erstreckt, daß eine vom Stift (34) auf den Einsatz (32) ausgeübte Kraft eine den Einsatz (32) in Richtung zur gegenüberliegenden Nutseitenfläche (16) hin verschiebende Komponente aufweist.

8. Schiene nach einem der Ansprüche 5 bis 7,
dadurch **gekennzeichnet,** daß der Einsatz (32) eine schräge Anlagefläche (38) für einen Fuß (36) des Stifts (34) hat.

## Claims

1. Rail for guiding at least one of two sheet-metal edge margins (42), more especially longitudinal edges of can bodies, which are to be welded together, having
- a supporting body (12) with a longitudinal groove (14) which incorporates two lateral surfaces (16) at least approximately parallel to each other and a base surface (18) which is at least approximately perpendicular to said lateral surfaces, and
- an insert (32) of hard material, which is fastened in the longitudinal groove (14) and butts against the base surface (18) thereof, characterised in that
- the longitudinal groove (14) has an undercut profile with an enlargement (20) which separates one of the lateral surfaces (16) of the groove from the base surface (18) thereof,
- the insert (32) is interchangeably fastened in the enlargement (20), from there extends at least as far as the plane of the opposite lateral surface (16) of the groove, and has an outer surface (40) which is directed away from the base surface (18) of the groove for supporting an end edge (44) of the sheet-metal edge margin (42), and
- the lateral groove surfaces (16) of the supporting body (12) are formed for direct guidance of lateral faces (46) of the sheet-metal edge margin (42).

2. Rail according to claim 1, characterised in that the insert (32) is a regular polygon in cross-section.

3. Rail according to claim 1 or 2, characterised in that the longitudinal groove (14) is undercut on both sides, with the result that an indent (26) opposes the enlargement (20), and the insert (32) extends from the enlargement (20) transversely through the longitudinal groove (14) into the indent (26).

4. Rail according to claim 3, characterised in that the enlargement (20) and the indent (26) together define a profile which matches the insert (32) and has rounded depressions (30) instead of corners.

5. Rail according to any of claims 1 to 4, characterised in that at least one bore which receives a pin (34) for clamping the insert (32) opens into the enlargement (20).

6. Rail according to claim 5, characterised in that the pin (34) is a threaded pin.

7. Rail according to claim 5 or 6, characterised in that the pin (34) extends at an angle (β) to the base surface (18) of the groove, such that a force exerted by the pin (34) on the insert (32) incorporates a component which displaces the insert (32) towards the opposite lateral surface (16) of the groove.

8. Rail according to any of claims 5 to 7, characterised in that the insert (32) has an oblique abutment surface (38) for a tip (36) of the pin (34).

## Revendications

1. Barre de guidage d'au moins l'un de deux bords de tôle (42), notamment des deux bords longitudinaux de corps cylindriques de boîtes de conserves, devant être soudés entre eux, comprenant :
- un corps de support (12), comportant une gorge longitudinale (14) qui présente deux surfaces latérales de gorge (16), au moins approximativement parallèles entre elles, et une surface de fond de gorge (18), au moins approximativement perpendiculaire à ces surfaces latérales, et
- une pièce rapportée (32) en matière dure qui est fixée dans la gorge longitudinale (14) et prend appui sur la surface de fond (18) de cette dernière,
caractérisée en ce que
- la gorge longitudinale (14) comporte une forme profilée en contre-dépouille présentant une partie plus large (20) par laquelle l'une des surfaces latérales de gorge (16) est séparée de la surface de fond de gorge (18),
- la pièce rapportée (32) est fixée dans la partie plus large (20) d'une manière permettant de la remplacer, s'étend de cette partie plus large (20) au moins jusqu'au plan de la surface latérale de gorge (16) opposée et comporte une surface extérieure (40) disposée du côté opposé à la surface de fond de gorge (18) et servant d'appui au chant (44) du bord de tôle (42) et
- les surfaces latérales de gorge (16) du corps de support (12) sont agencées de façon à assurer un guidage direct des surfaces latérales (46) du bord de tôle (42).

2. Barre suivant la revendication 1, caractérisée en ce que la pièce rapportée (32) possède une section transversale de forme polygonale régulière.

3. Barre suivant l'une des revendications 1 et 2, caractérisée en ce que la gorge longitudinale (14) a des deux côtés une forme en contre-dépouille, de sorte qu'un évidement (26) est situé en regard de la partie plus large (20), et en ce que la pièce rapportée (32) s'étend, dans le sens transversal à la gorge longitudinale (14), de la partie plus large (20) jusque dans l'évidement (26).

4. Barre suivant la revendication 3, caractérisée en ce que la partie plus large (20) et l'évidement (26) constituent ensemble une forme profilée qui est adaptée à la pièce rapportée (32) et qui, à la plaque des coins, comporte des rainures (30) arrondies.

5. Barre suivant l'une des revendications 1 à 4, caractérisée en ce qu'au moins un perçage, qui sert à recevoir un goujon (34) permettant l'immobilisation de la pièce rapportée (32), débouche dans la partie plus large (20).

6. Barre suivant la revendication 5, caractérisée en ce que le goujon (34) est un goujon fileté.

7. Barre suivant l'une des revendications 5 et 6, caractérisée en ce que le goujon (34) fait avec la surface de fond de gorge (18) un angle (β) tel qu'une force exercée par le goujon (34) sur la pièce rapportée (32) comporte une composante qui repousse la pièce rapportée (32) vers la surface latérale de gorge (16) opposée.

8. Barre suivant l'une des revendications 5 à 7, caractérisée en ce que la pièce rapportée (32) possède une surface biseautée (38) servant d'appui à un pied (36) du goujon (34).
